# EUROPEAN PATENT APPLICATION

(11) **EP 1 677 262 A1**
(43) Date of publication of application: **05.07.2006**
(21) Application number: 05258076.8
(22) Date of filing: 24.12.2005
(51) Int. Cl.: G07F 17/16, G07F 11/00, G07F 7/00

(54) **Vending equipment**

(30) Priority: 30.12.2004 GB 0428490
(71) Applicant: Inspired Broadcast Networks Limited, London W1F 8AD (GB)
(72) Inventor: Crowley, Norman, Eriskerry, Co. Wicklow (IE)
(74) Representative: Charig, Raymond Julian

(57) **Abstract**

An electromechanical vending machine is adapted to dispense physical products and digital information content to a user. The machine includes a payment unit for processing a payment from the user; a user input device for enabling user selection of one or more items to be dispensed; a physical product dispensing unit for dispensing physical product; and a digital data dispensing unit for delivering digital information content to a locally situated user device in communication with the vending machine. The vending machine includes means for communicating with different types of user device, and for determining the correct format of digital information content required by the user device.

## Description

The present invention relates to vending equipment and use thereof, and in particular to vending machines that can dispense physical products in response to user selection and payment.

Vending machines are in widespread use for dispensing a large range of physical commodities such as foodstuffs, drinks, cigarettes, stamps, tickets and the like. Throughout the present specification, the expression 'physical product' is used to refer to all such commodities, where the user (i.e. 'customer') of the vending machine receives a tangible physical product from the machine in return for making a payment that is received by, or at least partly processed by, the machine.

A significant part of the operational costs of such machines is that which is associated with regular checking and restocking of the physical products in the machine, in order to ensure that potential revenue is not lost when stocks of the product or products in the machine have been exhausted. In order to reduce the cost overheads of vending machines, the prior art has already proposed 'intelligent' or networked vending machines which are capable of signalling to a control point when a service call is required, e.g. for the purposes of restocking exhausted physical product lines. These machines conventionally notify an operator when a service visit is required, either for re-supply or repair of a faulty component.

The present invention proposes a further way in which the revenue from vending machines can be increased, and / or the cost overheads reduced, without necessarily contributing further to re-supply visits to the machine.

It is an object of the present invention to provide an improved vending machine.

According to one aspect, the present invention provides an electromechanical vending machine for dispensing physical products and digital information content to a user, comprising:
a payment unit for processing a payment from the user;
a user input device for enabling user selection of one or more items to be dispensed;
a physical product dispensing unit for dispensing physical product; and
a digital data dispensing unit for delivering digital information content to a locally situated user device in communication with the vending machine.

According to another aspect, the present invention provides a method of vending digital information content to a locally situated user device in communication with an electromechanical vending machine for dispensing physical products and digital information content to a user, comprising the steps of:
processing, in a payment unit, a payment from the user;
receiving a user selection of one or more digital information content items to be dispensed;
delivering the selected digital information content, from a digital data dispensing unit to a locally situated user device.

Embodiments of the present invention will now be described by way of example and with reference to the accompanying drawings in which:
Figure 1 is a schematic block diagram of the functional elements of a vending machine according to a preferred embodiment of the invention; and
Figure 2 is a schematic block diagram of a digital data vending interface of the machine of figure 1.

There are a large number of different portable digital data processing devices now used by the general public, for which it is necessary or desirable to routinely update the device with new digital information content. Examples of such portable digital data processing devices include digital audio players (e.g. MP3 players, of both the hard disk drive and solid state memory variety), digital video players (e.g. MPEG4 players, of both the hard disk drive and solid state memory variety), mobile telephones, personal digital assistants (PDA's) or 'palm-top' computers, handheld gaming devices, GPS navigation and mapping devices etc. The expression 'portable digital data processing devices' as used herein also extends to so-called 'convergence products' combining two or more of the above features.

For convenience, throughout the present specification, such portable digital data processing devices shall be referred to as 'user devices'.

In the case of digital audio players, many users wish to update the audio tracks stored on their players at times when they are away from home and not necessarily in a position to have access to their home PC-based music collection. Similarly, for digital video players, users may wish to obtain a new film to watch when away from home, e.g. when travelling. In the case of mobile telephones, many users like to update ringtones or games on their mobile telephones. In the case of PDA's or GPS navigation devices, users may wish to download local mapping data whilst away from home.

The widespread existence of physical product vending machines provides an ideal base for also providing users with a suitable mechanism for updating the digital information content of their user devices. From the vending machine operator's point of view, particularly for networked vending machines, the supply of digital information content, from a vending machine to a user, does not require frequent re-supply visits to the machine (if at all), and therefore offers an ideal opportunity to reduce overheads on an installed physical vending machine by increasing revenue without necessarily directly contributing to physical product re-supply visits.

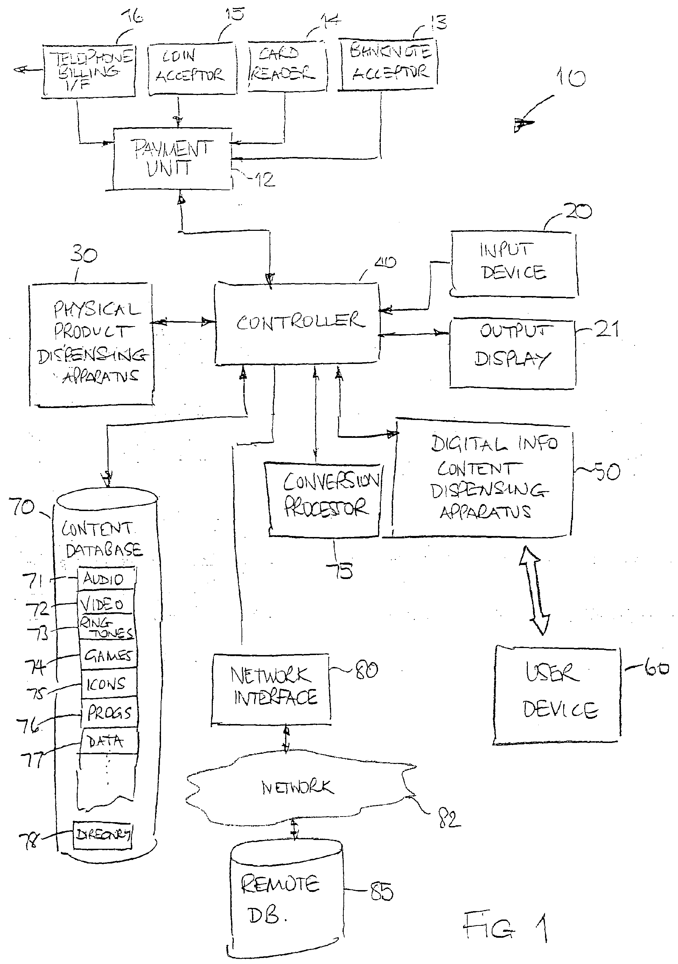

With reference to figure 1, a vending machine 10 includes a physical product vending facility and a digital data dispensing facility. The vending machine 10 includes a payment unit 12 which controls and validates payments from one or more payment interfaces 13 to 16. In the preferred arrangement shown, the vending machine offers multiple payment devices, including a conventional coin acceptor 15, a conventional credit or debit card reader 14, and banknote acceptor 13, and an electronic payment interface 16.

The electronic payment interface 16 may be of the type that enables billing to a user's mobile telephone account or other electronic payment system known in the art by connection to an appropriate electronic payment system (not shown).

It will be understood that any one or more of the payment interfaces 13 to 16 may be used.

The vending machine 10 also includes an input device 20 which may be a simple keypad or keyboard. More preferably, however, the input device 20 comprises a touch screen with graphical user interface. The vending machine 10 also preferably includes an output display 21 for giving instructions to the user, presenting purchase options to the user, advertising and any other useful information display. Preferably, the input device 20 and output display 21 are combined as a unitary touch screen device.

The vending machine 10 also includes a physical product dispensing unit 30 which may be of any conventional type. Physical product dispensing unit 30 may comprise a refrigerated cabinet for dispensing drinks receptacles, chocolate, sweets and other foodstuffs. Physical product dispensing unit 30 may comprise a hot food or beverage dispenser. Physical product dispensing unit 30 may comprise a unit for dispensing non-food commodities, such as cigarettes, personal and/or healthcare products. The expression 'physical products' (as defined above) is intended to include printed materials such as tickets for travel or other service vouchers.

A controller 40 provides for control of, and interface between, the payment unit 12, the input and output device or devices 20, 21 and the physical product dispensing unit 30.

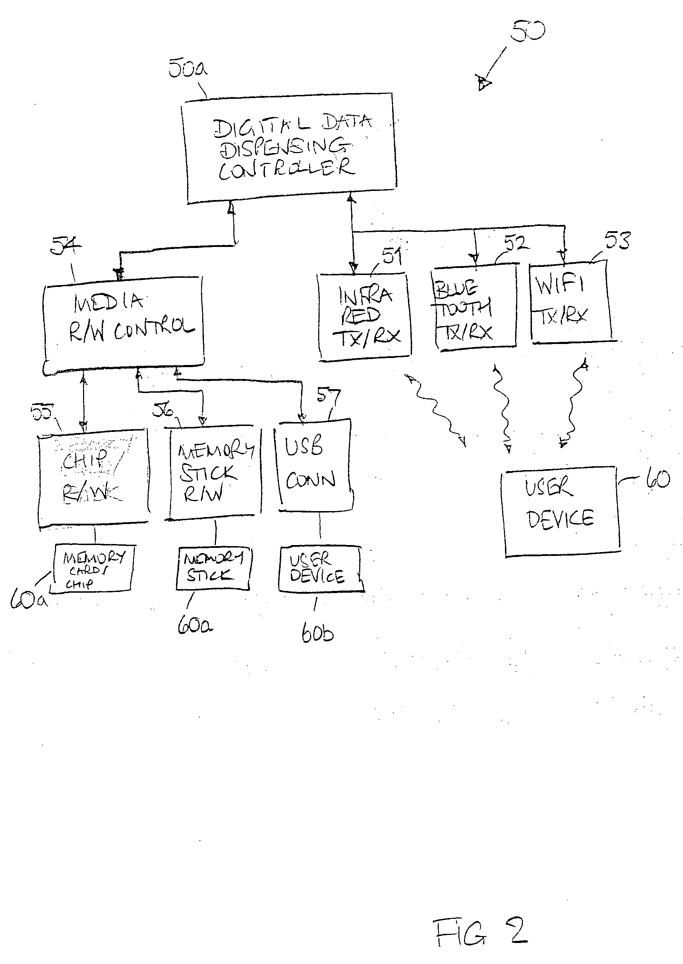

The vending machine 10 also includes a digital data dispensing unit 50 for delivering digital information content to a locally situated user device 60. The data dispensing unit 50 is described more particularly with reference to figure 2. The expression digital information content' is intended to encompass audio data (including ring tone data, music and speech), video (moving image) data, gaming data and gaming programs, image data (including graphics data utilised in the display of logos, icons, screen savers, maps, pictures etc) and computer applications programs generally.

There are at least two significant problems with dispensing digital data to portable user devices 60. Firstly, there are a significant number of different physical interfaces that must be accommodated in order that the transfer of data to the user device can be effected. Secondly, there are a significant number of data formats in use, not only for the different types of digital information content, but also even within one content type. For example, for the digital audio content type, there are a number of different formats in widespread use, such as MP3, WMA and WAV file formats.

With reference to figure 2. the data dispensing unit 50 preferably comprises a number of interface units 51 to 54 for providing alternative local communication channel types to different types of user device, under the control of a digital data dispensing device controller 50a. A first, wireless, class of these interface units includes, for example, an infrared interface transceiver 51, and Bluetooth standard interface transceiver 52 and a WiFi standard interface transceiver 53. A second class of these interface units includes those where a wired or electrical contact is required to write directly, or via a local processor, to a storage medium in or associated with the user device.

Thus, a media read/write device 54 includes physical connection ports 55, 56, 57 for various types of device, including a memory chip card reader/writer 55, a memory stick reader/writer 56 and a USB device connector 57. The USB connector 57 may be configured to read and write directly to a USB memory stick or drive, and / or may be configured to communicate with a USB port of a user device that includes its own processor.

Other types of wired or wireless interfaces known in the art may be used, such as those known for making direct wired connections to a mobile telephone, portable computing device or the like.

Referring again to figure 1, the vending machine 10 includes or has access to a data storage device on which digital information content for delivery to the user devices 60 is stored. In the preferred arrangement, the vending machine 10 includes a local database 70 storing digital data content, and a network interface 80 which provides data communication facility to at least one remote database 85 via a network 82. In the preferred configuration, the network 82 is provided by the telephony network and the internet, although any data communication medium will serve.

Local database 70 and remote database 85 provide a repository of a substantial range of digital information content for download to the user device 60. This information content may include *inter alia* digital audio files 71, digital video files 72, mobile telephone ring tones 73, mobile telephone games programs 74, mobile telephone screen icons 75, palm-top computer programs 76, handheld gaming device game programs 74, other computer programs 76 or data files 77 for computer programs.

In a preferred configuration, local database 70 may serve as a cache of the most frequently and/or most recently requested digital information content, while remote database 85 may provide a much more comprehensive collection of digital information content.

Because of the number of different types of user device 60 in use, and the number of different data formats required for those devices, the databases 70 and / or 85 may store multiple copies of digital information content in the various different formats. Preferably, however, the databases 70 and / or 85 are configured to store the digital information content in fewer than all the required formats. In this case, a format conversion processor 75 is provided that enables the conversion of one file type to another. For example, the database 70 may contain digital audio (e.g. music) content in a high quality, uncompressed WAV format and provide this data for real time conversion to the format required by a user device, e.g. MP3.

Preferably, the conversion processor 75 is located within the vending machine 10, especially where digital information content is cached locally. However, particularly if the network 82 provides a suitably high bandwidth connection to database 85, the conversion processor could be located remotely, e.g. at the database 85.

In a preferred mode of use, a user will view, on output display 21, a selection of digital information content and /or physical products available for dispensing from the vending machine 10. Where dispensing of physical product is required, this will be handled in a generally conventional manner and need not be discussed further. However, where a user wishes to purchase digital information content, a menu of possible content types will be displayed on the output display 21. The user may select from, for example, a menu of 'music', 'video', 'ringtones', 'games', etc. Selection of each menu option may then result in display of further sub-menu options. For example, the user may be provided with a list of music genres or film genres, selection of one of which leads to menus of available music artists / albums / tracks or films.

After selection of an item of digital information content, the vending machine 10 will need to determine an appropriate format of content, and an appropriate local communication medium for communication with the user device 60.

For example, for mobile phone data content, it may be necessary to establish the make and model of phone; for music content or video content, it may be necessary to establish the compression format. Some content type attributes may be determined by the vending machine 10 automatically once communication has been established with the user device 60. Other content type attributes may need to be entered manually by the user from a list of menu options.

Communication medium type may be established by manual user selection or automatically or a combination of both. For example, for the wired or electrical contact communication channels exemplified by interface units and interface ports 54 to 57 (figure 2), communication channel selection can be effected automatically by physical and / or electrical device sensing when the user has inserted a device. For the wireless communication channels exemplified by transceivers 51 to 53, communication channel selection can be effected automatically by each transceiver automatically attempting to establish communication with a local device 60, or by the user selecting an appropriate type.

When communication with the user device 60 is established, the vending machine 10 may automatically sense other device parameters necessary to ensure correct delivery of the selected information content and appropriate format compatibility for delivery using known device sensing techniques.

Once the communication channel has been correctly established, and the item and format of digital information content has been correctly selected, the controller 40 retrieves the requisite data from local content database 70 and / or remote content database 85, performs any format conversion necessary (if any) using conversion processor 75, and passes the data to the digital data dispensing unit 50 for delivery to the user device via the selected interface unit 51 to 57.

At some point in the preceding operations, and before delivery of the digital information content to the user device 60, the user will be prompted for appropriate payment using conventional payment techniques via the payment unit 12.

While the embodiments above have described the use of a single remote database 85, it will be understood that this could also be a distributed database in the sense of both 'geographically distributed' and 'organisationally distributed'. For example, multiple databases 85 may be accessible to the vending machine 10, each belonging to a different digital information content provider organisation. For example, various organisations may provide digital audio content, other organisations may provide digital video content, and still further others may provide mobile phone content, games content and the like.

In this arrangement, the local database 70 may include an information content source directory 78 correlating each available digital information content item with a respective source database 85. The network interface 80 may then provide appropriate connection addresses for routing requests for information content to the appropriate destination using conventional protocols.

The vending machine 10 may include a transaction log (not shown) for maintaining a list of digital information content delivered to user devices 60 for the purposes of royalty collection or other sales or accountancy purposes.

In preferred configurations, the user is able to have information content delivered directly to the user device 60 using wireless communication channels merely by holding the device sufficiently close to the vending machine that the wireless communication channel operates satisfactorily. Typically, with the interface 1 to 53 types illustrated, the operating range will be of the order of up to a few metres.

For direct physical connections, content delivery may require removal of a memory card or stick 60a from the user device 60 and insertion into an appropriate slot on the vending machine 10, or coupling of the user device 60b to a suitable connection port, e.g. USB connector 57, on the vending machine 10.

Certain types of physical connection ports 55, 56, 57 may be susceptible of damage by vandals or careless users and could therefore be protected by an automatic cover or engagement mechanism which only enables access to the connection port, or which completes connection automatically, when selection and payment has been made and /or correct insertion of a user device has been confirmed.

Other embodiments are intentionally within the scope of the accompanying claims.

## Claims

1. An electromechanical vending machine for dispensing physical products and digital information content to a user, comprising:
a payment unit for processing a payment from the user;
a user input device for enabling user selection of one or more items to be dispensed;
a physical product dispensing unit for dispensing physical product; and
a digital data dispensing unit for delivering digital information content to a locally situated user device in communication with the vending machine.

2. The vending machine of claim 1 in which the payment unit comprises any one or more of a coin acceptor unit, a credit or debit card reader, a banknote acceptor, or mobile telephone based billing interface.

3. The vending machine of claim 1 or claim 2 in which the physical product dispensing unit comprises a drinks and / or foodstuffs dispensing unit.

4. The vending machine of claim 1, claim 2 or claim 3 in which the digital data dispensing unit comprises a wireless communication device for communication with the user device.

5. The vending machine of claim 4 in which the wireless communication device includes one or more of a Bluetooth transceiver, a WiFi transceiver and an infra-red transceiver.

6. The vending machine of any preceding claim in which the digital data dispensing unit comprises a read / write device for writing data to a portable digital data storage medium that is, or forms part of, the user device.

7. The vending machine of claim 6 in which the read / write device is adapted for writing data to any one or more of a memory card, a memory chip, a portable hard drive, a USB device, a mobile phone and a portable music playing device.

8. The vending machine of any preceding claim in which the digital data dispensing unit includes a control processor adapted to communicate with the user device prior to dispensing requested digital information content to determine a category of device and thereby determine a format of digital information content required by the device.

9. The vending machine of claim 8 further including means for automatically modifying a user selection of a digital data content item to be dispensed according to the category of device determined.

10. The vending machine of claim 9 further including means for converting a selected digital information content item to a format compatible with the user device.

11. The vending machine of any preceding claim further including a network interface for retrieving a user selected digital information content item from a remote server.

12. The vending machine of claim 11 further including a directory of remote servers mapping each of a plurality of digital information content items with a respective remote server.

13. A method of vending digital information content to a locally situated user device in communication with an electromechanical vending machine for dispensing physical products and digital information content to a user, comprising the steps of:
processing, in a payment unit, a payment from the user;
receiving a user selection of one or more digital information content items to be dispensed;
delivering the selected digital information content, from a digital data dispensing unit to a locally situated user device.
